# EUROPÄISCHE PATENTSCHRIFT

(11) **EP 0 766 357 B1**
(45) Veröffentlichungstag und Bekanntmachung des Hinweises auf die Patenterteilung: **20.06.2001**
(21) Anmeldenummer: 96114909.3
(22) Anmeldetag: 17.09.1996
(51) Int. Cl.: H01S 3/06, G02B 6/26

(54) **Faserverstärker für mehrere Signale mit unterschiedlichen Wellenlängen unter Einsatz eines Fabry-Perot-Filters**
Fibre amplifier for a plurality of signals of different wavelengths comprising a Fabry-Perot filter
Amplificateur à fibre optique pour une multitude de signaux à longueurs d'onde différents comprenant un filtre Fabry-Perot

(30) Priorität: 28.09.1995 DE 19536230
(43) Veröffentlichungstag der Anmeldung: 02.04.1997
(73) Patentinhaber: SIEMENS AKTIENGESELLSCHAFT, 80333 München (DE)
(72) Erfinder: Haltenorth, Helmut, Dr., 80993 München (DE)

(56) Entgegenhaltungen:
- IEEE JOURNAL OF QUANTUM ELECTRONICS, Bd. 31, Nr. 3, 1.März 1995, Seiten 472-480, XP000491569 ZERVAS M N ET AL: "EFFICIENT ERBIUM-DOPED FIBER AMPLIFIERS INCORPORATING AN OPTICAL ISOLATOR"
- IEEE PHOTONICS TECHNOLOGY LETTERS, Bd. 5, Nr. 9, 1.September 1993, Seiten 1023-1026, XP000414169 WILLNER A E ET AL: "PASSIVE EQUALIZATION OF NONUNIFORM EDFA GAIN BY OPTICAL FILTERING FOR MEGAMETER TRANSMISSION OF 20 WDM CHANNELS THROUGH A CASCADE OF EDFA'S"
- ELECTRONICS LETTERS, Bd. 28, Nr. 3, 30.Januar 1992, Seiten 216-217, XP000305946 MILLER C M ET AL: "WAVELENGTH-LOCKED, TWO-STAGE FIBRE FABRY-PEROT FILTER FOR DENSE WAVELENGTH DIVISION DEMULTIPLEXING IN ERBIUM-DOPED FIBRE AMPLIFIER SPECTRUM"

## Beschreibung

Bei der Weiterleitung eines optischen Signales über eine Übertragungsstrecke, in der eine Glasfaser als Wellenleiter dient, kann zur Kompensation der Streckenverluste eine mehrfache Verstärkung in kaskadierten Faserverstärkern erforderlich sein. Dabei wird angestrebt, daß das optische Signal am Ausgang jedes Faserverstärkers unabhängig von der mittleren Leistung des optischen Signales am Eingang des Faserverstärkers auf den gleichen Pegel bei geringstmöglicher Verschlechterung des Signal zu Rauschverhältnisses angehoben wird. Die in einem Faserverstärker innerhalb der Verstärkungsbandbreite auftretende Spontanemission führt durch Verstärkung in den nachfolgenden Faserverstärkern zu einer in der Fachwelt als ASE(Accumulated Stimulated Emission) bekannten Rauschakkumulation und damit zu einer weiteren Verschlechterung des Signal zu Rauschverhältnisses. Werden im Zuge einer WDM(Wavelength Division Multiplex)-Übertragung mehrere optische Signale mit unterschiedlichen, im spektralen Verstärkungsbereich benachbarten Wellenlängen über eine Glasfaserstrecke übertragen, werden am Ausgang eines Faserverstärkers eine von der Wellenlänge unabhängige Anhebung auf den gleichen Pegel und eine über sämtliche Wellenlängen gleichmäßige Verschlechterung des Signal zu Rauschverhältnisses angestrebt. Bekannte Faserverstärker verstärken einen Kamm von vielen Signal-Wellenlängenkanälen im Verstärkungsspektrum ungleichmäßig, nämlich in Abhängigkeit von der Lage im Verstärkungsspektrum, von dem Leistungspegel des Kanals am Eingang des Faserverstärkers und von der summierten Leistung der Signale am Eingang des Faserverstärkers.

Die Erfindung betrifft eine Anordnung zur Verstärkung mehrerer optischer Signale mit unterschiedlichen Wellenlängen in einem optische Signale führenden Wellenleiter, bei der
- ein erster Koppler WDM1 mit seinen Eingängen mit einem ein optisches Signal führenden Eingangswellenleiter EW beziehungsweise mit einem, ein optisches Signal mit einer Pumpwellenlänge λpump abgebenden Pumplaser verbunden ist und der mit seinem Ausgang mit dem einen Ende einer ersten dotierten Faser DF1 verbunden ist
- der Eingang eines Wellenlängenkopplers WDM2 mit dem anderen Ende der ersten dotierten Faser verbunden ist und der das optische Signal mit der Pumpwellenlänge führende eine Ausgang des Wellenlängenkopplers WDM2 mit einem Eingang eines Kopplers WDM3 verbunden ist und der die mehreren optischen Signale führende andere Ausgang des Wellenlängenkopplers WDM2 über ein Verlustelement mit dem anderen Eingang des Kopplers WDM3 verbunden ist
- der Ausgang des Kopplers WDM3 mit dem einen Ende einer zweiten dotierten Faser DF2 verbunden ist und
- das andere Ende der zweiten dotierten Faser mit dem das verstärkte optische Signal führenden Ausgangswellenleiter AW verbunden ist.

Verstärkeranordnungen für den Einwellenbetrieb mit einem optischen Filter oder einem Isolator in der dotierten Faserstrecke des Faserverstärkers sind aus A.Yu, M.Mahony, S. A. Siddiqui; Proceedings of ECOC 92, Berlin September 1992; paper WeP2.4; pp. 481-484 oder aus M. N. Zervas, R.I. Laming; Proceedings of ECOC 92, Berlin September 1992; paper MoA3.2; pp. 81-84 bekannt.

Verstärkeranordnungen, bei denen das optische Signal in einer konzentrierten Einheit gedämpft wird, während die Pumpwellenlänge weitgehend ungedämpft passieren kann, werden in der Fachwelt als lumped-loss-Konfiguration bezeichnet.

Aus IEEE Journal of Quantum Electronics, Bd. 31, Nr. 3. 1. März 1995, Seiten 472 bis 480 ist ein erbiumdotierter Faserverstärker für eine einzige Nutzwellenlänge in lumped-loss-Konfiguration bekannt, bei der in den Pfad der Nutzwellenlänge ein optischer Isolator zur Reduzierung der ASE (amplified spontaneous emission) angeordnet ist.

Aus IEEE Photonics Technology Letters, Band 5, Nr. 9, 1. September 1993, Seiten 1023 -1026 ist ein erbiumdotierter Faserverstärker für mehrere Wellenlängen bekannt, bei dem in Signalrichtung nach dem Verstärker ein Fabry-Perot-Filter zum Ausgleich unterschiedlicher spektraler Verstärkung angeordnet ist.

Aus ELEKTRONICS LETTERS Bd. 28, Nr. 3, S. 216-217 ist ein (abstimmbares) Fabry-Perot-Filter für dichtes (engbenachbartes) Wellenlängen-Demultiplexen im Spektrum eines erbiumdotierten Faserverstärkers für mehrere Wellenlängen bekannt.

Der Erfindung liegt das Problem zugrunde, eine Anordnung zur Verstärkung mehrerer optischer Signale mit unterschiedlichen Wellenlängen in einem optischen Signale führenden Wellenleiter anzugeben, bei der die oben dargelegten Nachteile vermieden sind.

Das Problem wird dadurch gelöst, daß das Verlustelement durch ein Fabry-Perot-Filter gegeben ist und der Anordnung auf dem Eingangswellenleiter mehrere optische Signale mit unterschiedlichen Wellenlängen zuführbar sind.

Der erfindungsgemäße Faserverstärker, der für mehrere Signale mit unterschiedlichen Wellenlängen den Aufwand für lediglich ein Filterelement bedarf, bringt eine Verstärkung der Signale auf einen im wesentlichen gleich hohen Pegel mit sich, wobei das Fabry-Perot-Filter die zwischen den Durchlaßbereichen liegenden Rauschanteile und damit auch die zwischen den Durchlaßbereichen liegenden Rauschakkumulationen, die durch Spontanemission bedingt sind, wegfiltert, womit das Gesamtrauschen verringert ist.

Gemäß einer besonderen Ausführungsform ist das Fabry-Perot-Filter bezüglich seines spektralen Durchlaßbereiches abstimmbar. Diese Maßnahme bringt durch gezielte Ausblendbarkeit einzelner Wellenlängenkanäle eine Vermittlungsfunktion mit sich.

Die Erfindung wird nun als Ausführungsbeispiel in einem zum Verständnis erforderlichen Umfang anhand von Figuren näher erläutert. Dabei zeigen:

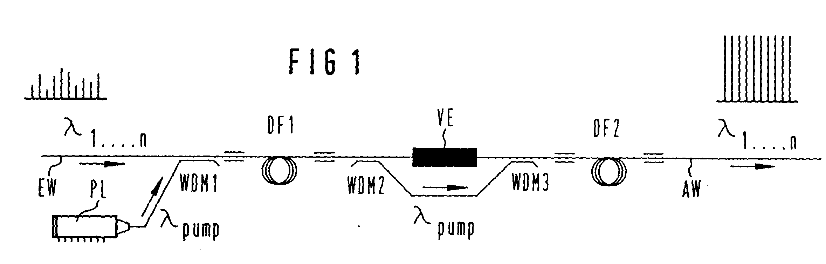

- Fig 1: eine prinzipielle Darstellung eines Faserverstärkers zur Verstärkung mehrerer optischer Signale, die das Verständnis der Erfindung erleichtert.
- Fig 2: eine erfindungsgemäße Ausführungsform des Verlustelementes aus Fig 1.
- Fig 3: eine vergleichende Ausführungsform des Verlustelementes aus Fig 1, die das Verständnis der Erfindung erleichtert.
- Fig 4: eine zweite vergleichende Ausführungsform des Verlustelementes aus Fig 1, die das Verständnis der Erfindung erleichtert.

Ein erster Koppler WDM1 ist mit seinen Eingängen mit einem mehrere optische Signale mit benachbarten, unterschiedliche Wellenlängen λ1..n führenden Eingangswellenleiter EW beziehungsweise mit einem ein optisches Signal mit einer Pumpwellenlänge λpump abgebenden Pumplaser PL verbunden. In unmittelbarer Nähe des Eingangswellenleiters ist ein mögliches Spektrum von dem Eingangswellenleiter zugeführten Signalen mit unterschiedlichen, benachbarten Wellenlängen und unterschiedlichen, niedrigen Pegeln angedeutet. Der Ausgang des ersten Kopplers ist mit dem einen Ende einer ersten dotierten Faser DF1 verbunden. Das andere Ende der ersten dotierten Faser DF1 ist mit dem Eingang eines Wellenlängenkopplers WDM2 verbunden. Ein Ausgang des Wellenlängenkopplers WDM2, der ein bevorzugtes Durchlaßverhalten für das optische Signal mit der Pumpwellenlänge aufweist, ist mit einem Eingang eines Kopplers WDM3 verbunden. Der die mehreren optischen Signale führende andere Ausgang des Wellenlängenkopplers WDM2 ist über eine Verlustkomponente VE mit dem anderen Eingang des Kopplers WDM3 verbunden. Der Wellenlängenkoppler WDM2, die Verlustkomponente und der Koppler WDM3 bilden also eine Anordnung, in der das Signal mit der Pumpwellenlänge weitgehend ungedämpft weitergeleitet wird und die mehreren optischen Signale in ihrem Pegel erheblich gedämpft weitergeleitet werden. Das eine Ende einer zweiten dotierten Faser DF2 ist mit dem Ausgang des Kopplers WDM3 und das andere Ende der zweiten dotierten Faser mit einem Ausgangswellenleiter AW verbunden. In unmittelbarer Nähe des Ausgangswellenleiters ist ein mögliches Spektrum von verstärkten Signalen mit im wesentlichen untereinander gleich hohen Pegeln angedeutet. Der erste Koppler WDM1 und/oder der dritte Koppler WDM3 können in einer Bauart ausgeführt sein, bei der die Eingänge ein von der Wellenlänge der zugeführten Signale unabhängiges Durchlaßverhalten aufweisen; in einer besonderen Ausführungsform ist erste Koppler WDM1 und/oder der dritte Koppler je durch einen Wellenlängenkoppler gegeben, bei dem der Eingang, an dem das optische Signal mit der Pumpwellenlänge zugeführt ist, ein bevorzugtes Durchlaßverhalten für die Pumpwellenlänge aufweist.

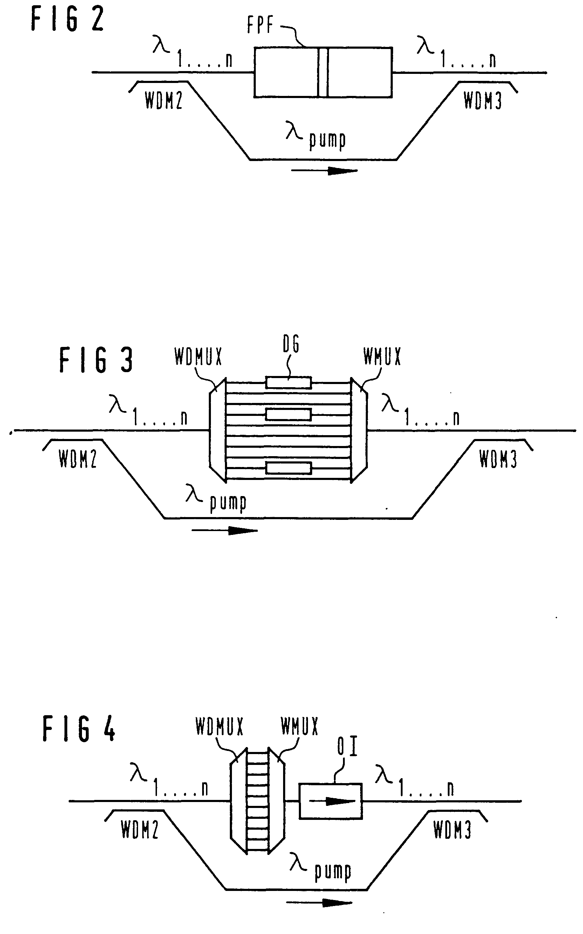

Fig 2 zeigt ein zwischen den Wellenlängenkoppler WDM2 und den Koppler WDM3 eingefügtes Verlustelement, das mit einem Fabry-Perot-Filter FPF gebildet ist. Die Lagen und die Abstände der Wellenlängen-Durchlaßbereiche des Fabry-Perot-Filters, die auch als Transmissionskamm oder in der Fachwelt als Free Spectral Range (FSR) bezeichnet werden, gleichen den Lagen und den Abständen der Wellenlängen der mehreren optischen Signale, wobei die Wellenlänge jedes Signals genau einem Durchlaßbereich zugeordnet ist. Das Fabry-Perot-Filter filtert die zwischen den Durchlaßbereichen liegenden Rauschanteile und damit auch die zwischen den Durchlaßbereichen liegenden Rauschakkumulationen, die durch Spontanemission bedingt sind, weg, womit das Gesamtrauschen verringert ist. In einer besonderen Ausgestaltung der Erfindung ist das Fabry-Perot-Filter als ein bezüglich der Lagen und die Abstände der Wellenlängen-Durchlaßbereiche abstimmbares Fabry-Perot-Filter ausgeführt. Bei dem abstimmbaren Fabry-Perot-Filter sind durch Veränderung des Transmissionskammes Wellenlängenkanäle ausblendbar, womit die Möglichkeit einer eingeschränkten Vermittlungsfunktion gegeben ist.

Fig 3 zeigt ein zwischen den Wellenlängenkoppler WDM2 und den Koppler WDM3 eingefügtes Verlustelement, das mit einem Wellenlängendemultiplexer WDMUX und einem Wellenlängenmultiplexer WMUX gebildet ist. Die Durchlaßbereiche des Wellenlängendemultiplexers und des Wellenlängenmultiplexers gleichen den Wellenlängen der mehreren Signale. Bei höheren Verlusten kann anstelle des Wellenlängenmultiplexers ein Vielfachkoppler angeordnet sein. Die Anornung nach Fig 3 bildet also ein Vielfachfilter für genau die Anzahl der mehrern optischen Signale. Bei der Anordnung nach Fig 3 ist die Anzahl der Durchlaßereiche genau auf die Anzahl der mehreren optischen Signale begrenzbar, womit Rauschanteile, die innerhalb von nicht benötigten Durchlaßbereichen liegen, ausgangsseitig unterdrückt sind. Bei der Anordnung nach Fig 3 sind die Abstände der Durchlaßbereiche bezüglich der Wellenlängen frei von einer Periodizität der Wellenlängen wählbar. Bei einer besonderen Ausgestaltung der Anordnung nach Fig 3 ist die Transmission für jede Wellenlänge gesondert, beispielsweise durch Einfügen von Dämpfungsgliedern DG zwischen den Wellenlängendemultiplexer und den Wellenlängenmultiplexer, wählbar. Diese Maßnahme bringt zur Erzielung von untereinander gleichen Pegeln der Wellenlängen am Ausgang des Faserverstärkers eine Anpaßbarkeit der Verstärkung für jede Wellenlänge mit sich; dabei kann zur Kompensation der unterschiedlichen spektralen Verstärkung des Faserverstärkers das Vielfachfilter mit seiner Einhüllende des Filterkurvenkammes komplementär zur spektralen Verstärkungskurve des Faserverstärkers ausgebildet sein.

Die Anordnungen nach Fig 2 und Fig 3 sind für bidirektionale Übertragung von auf einem Wellenleiter geführten Signalen brauchbar. Bei der Anordnung nach Fig 3 sind für eine bidirektionale Übertragung mit optischen Signalen unterschiedlicher Wellenlänge durch Anordnung geeigneter Dämpfungsglieder zwischen dem Wellenlängendemultiplexer und dem Wellenlängenmultiplexer eine Anpaßbarkeit an die jeweils erforderlichen Verstärkungen gegeben.

Fig 4 zeigt ein mit einem Vielfachfilter aus Fig 3 gebildetes Verlustelement, dem in Signalrichtung ein optischer Isolator OI nachgeschaltet ist. Bei dieser Anordnung werden im unidirektionalen Signalverkehr die auf einer durch Spontanemission bedingten Rauschakkumulation beruhenden Rauschanteile, die nicht durch das optische Vielfachfilter herausgefiltert werden, unterdrückt.

## Patentansprüche

1. Anordnung zur Verstärkung mehrerer optischer Signale mit unterschiedlichen Wellenlängen in einem optische Signale führenden Wellenleiter, bei der
- ein erster Koppler (WDM1) mit seinen Eingängen mit einem ein optisches Signal führenden Eingangswellenleiter (EW) beziehungsweise mit einem, ein optisches Signal mit einer Pumpwellenlänge (λpump) abgebenden Pumplaser verbunden ist und der mit seinem Ausgang mit dem einen Ende einer ersten dotierten Faser (DF1) verbunden ist
- der Eingang eines Wellenlängenkopplers (WDM2) mit dem anderen Ende der ersten dotierten Faser verbunden ist und der das optische Signal mit der Pumpwellenlänge führende eine Ausgang des Wellenlängenkopplers (WDM2) mit einem Eingang eines Kopplers (WDM3) verbunden ist und der die mehreren optischen Signale führende andere Ausgang des Wellenlängenkopplers (WDM2) über ein Verlustelement mit dem anderen Eingang des Kopplers (WDM3) verbunden ist
- der Ausgang des Kopplers (WDM3) mit dem einen Ende einer zweiten dotierten Faser (DF2) verbunden ist und
- das andere Ende der zweiten dotierten Faser mit dem das verstärkte optische Signal führenden Ausgangswellenleiter (AW) verbunden ist
**dadurch gekennzeichnet, daß**
- das Verlustelement durch ein Fabry-Perot-Filter gegeben ist und
- der Anordnung auf dem Eingangswellenleiter mehrere optische Signale mit unterschiedlichen Wellenlängen zuführbar sind.

2. Anordnung nach Anpruch 1
**dadurch gekennzeichnet,** daß
das Fabry-Perot-Filter bezüglich seines spektralen Durchlaßbereiches abstimmbar ist.

## Claims

1. Arrangement for amplification of a number of optical signals at different wavelengths in a waveguide carrying optical signals, in which
- a first coupler (WDM1) is connected by its inputs to an input waveguide (EW) carrying an optical signal, or to a pump laser which emits an optical signal at a pump wavelength (λpump), and is connected by its output to one end of a first doped fibre (DF1),
- the input of one wavelength coupler (WDM2) is connected to the other end of the first doped fibre, and that output of the wavelength coupler (WDM2) which carries the optical signal at the pump wavelength is connected to one input of a coupler (WDM3) and the other output of the wavelength coupler (WDM2), which carries the number of optical signals, is connected via a lossy element to the other input of the coupler (WDM3),
- the output of the coupler (WDM3) is connected to one end of a second doped fibre (DF2), and
- the other end of the second doped fibre is connected to the output waveguide (AW) carrying the amplified optical signal,
characterized in that
- the lossy element is provided by a Fabry-Perot filter, and
- the arrangement on the input waveguide can be supplied with a number of optical signals at different wavelengths.

2. Arrangement according to Claim 1,
characterized in that
the spectral pass band of the Fabry-Perot filter is tuneable.

## Revendications

1. Dispositif pour amplifier plusieurs signaux optiques ayant des longueurs d'onde différentes dans un guide d'ondes guidant des signaux optiques, dans lequel
- un premier coupleur (WDM1) est relié par ses entrées à un guidé d'ondes (EW) d'entrée guidant un signal optique et respectivement à un laser de pompage fournissant un signal optique ayant une longueur d'onde de pompage (λₚᵤₘₚ), et est relié par sa sortie à l'une des extrémités d'une première fibre (DF1) dopée,
- l'entrée d'un coupleur (WDM2) de longueurs d'onde est reliée à l'autre extrémité de la première fibre dopée et une sortie du coupleur (WDM2) de longueurs d'onde guidant le signal optique à la longueur d'onde de pompage est reliée à une entrée d'un coupleur (WDM3) et l'autre sortie qui conduit la pluralité de signaux optiques du coupleur (WDM2) de longueurs. d'onde est reliée par l'intermédiaire d'un élément à perte à l'autre entrée du coupleur (WDM3),
- la sortie du coupleur (WDM3) est reliée à une extrémité d'une deuxième fibre (DF2) dopée, et
- l'autre extrémité de la deuxième fibre dopée est reliée au guide d'ondes (AW) de sortie guidant le signal optique amplifié,
caractérisé en ce que
- l'élément à perte est obtenu par un filtre de Fabry-Perot, et
- plusieurs signaux optiques de longueurs d'onde différentes peuvent être amenés au dispositif sur le guide d'onde d'entrée.

2. Dispositif suivant la revendication 1, caractérisé en ce que le filtre de Fabry-Perot peut être accordé en ce qui concerne sa bande passante spectrale.
